# EUROPÄISCHE PATENTSCHRIFT

(11) **EP 4 754 459 B1**
(45) Veröffentlichungstag und Bekanntmachung des Hinweises auf die Patenterteilung: **18.11.2026**
(21) Anmeldenummer: 25770722.4
(22) Anmeldetag: 23.09.2025
(51) Int. Cl.: F27B 7/42, F27D 19/00, F27D 21/00, C04B 7/36, C04B 7/44

(54) **MESSUNG DES FALSCHLUFTEINTRAGES IN EINE OXYFUEL ANLAGE**
MEASUREMENT OF THE INTRODUCTION OF INFILTRATED AIR INTO AN OXYFUEL INSTALLATION
MESURE DE L'INTRODUCTION D'AIR INFILTRÉ DANS UNE INSTALLATION D'OXYCOMBUSTION

(30) Priorität: 02.10.2024 DE 102024128483; 02.10.2024 LU 103394
(43) Veröffentlichungstag der Anmeldung: 10.06.2026
(73) Patentinhaber: thyssenkrupp Polysius GmbH, 59269 Beckum (DE); thyssenkrupp AG, 45143 Essen (DE)
(72) Erfinder: RICKERT, Peter, 59505 Bad Sassendorf (DE); DREPPER, Michael, 48143 Münster (DE)
(74) Vertreter: Moser Götze & Partner Patentanwälte mbB
(86) Internationale Anmeldenummer: PCT/EP2025/077131
(87) Internationale Veröffentlichungsnummer: WO 2026/073770

(56) Entgegenhaltungen:
- CN-A- 115 682 711
- DE-A1- 102018 206 674
- JP-B2- 7 518 888

## Beschreibung

Die Erfindung betrifft ein Verfahren und eine Vorrichtung zur Messung des Falschlufteintrages in eine Anlage, die zur thermischen Behandlung betrieben wird, insbesondere Oxyfuel-Anlagen zur Herstellung von Klinker aus Kalkstein in der Zementindustrie, um so eine Abschätzung hinsichtlich der Dichtheit der Anlage zu treffen.

Oxyfuel-Anlagen werden anstelle von herkömmlichen Anlagen nicht mit Luft, sondern mit möglichst reinem Sauerstoff betrieben. Im Ergebnis bestehen die Abgase aus Kohlendioxid und aus wenigen weiteren Verbrennungsprodukten, wenn entsprechende Elemente durch den Brennstoff eingebracht werden. Somit erhält man am Ende einen vergleichsweise reinen Kohlendioxidgasstrom, welcher in wirtschaftlicher Weise abgetrennt werden kann und somit werden CO₂-Emissionen in die Atmosphäre vermieden.

Daher ist es wünschenswert den Falschlufteintrag in eine Oxyfuel-Anlage zu minimieren, da durch den Eintrag von Luft und damit von Stickstoff die Reinheit des Kohlendioxids verringert wird. Dabei besteht jedoch kein Anspruch auf absolute Dichtigkeit, da einige Falschlufteinträge üblicherweise unvermeidbar sind.

Gerade in der Zementindustrie wird die Oxyfuel-Technologie als Möglichkeit gesehen, die Kohlendioxidemission zu reduzieren, da neben dem aus der Verbrennung stammenden Kohlendioxid weiteres Kohlendioxid prozessbedingt aus dem Kalkstein freigesetzt wird, sodass die Kohlendioxidemissionen vergleichsweise hoch sind.

Jedoch sind die Anlagen vergleichsweise groß, alleine der Drehrohrofen hat üblicherweise bereits eine Länge von 50 m oder auch deutlich mehr. Und auch Calcinator und Vorwärmer sind oftmals in einem vergleichsweise großen Turm von 50 m oder auch deutlich mehr integriert. Die Dichtheitsanforderungen hinsichtlich des zulässigen Falschlufteintrages in die Prozessgasatmosphäre bei diesen Anlagen, die bis zu 1.000 m³/h oder auch deutlich mehr betragen kann, ist im Vergleich zu den Anforderungen, die mit klassischen Dichtheitsprüfung erfüllt werden müssen, deutlich geringer. Daher sind klassische Dichtheitsprüfungen für diese Anwendung nicht sinnvoll.

Weiterhin steht die quantitative Messung des Falschlufteintrages im Vordergrund und nicht eine qualitative Aussage hinsichtlich der Dichtheit der Anlage. Gleichzeitig ist aber für das Erreichen der Spezifikationen wichtig, den tatsächlichen Volumenstrom mengenmäßig zu kennen, da sich daraus schon vor der Inbetriebnahme gegebenenfalls Optimierungs- oder Reparaturmaßnahmen an den Komponenten ergeben können, um eine entsprechende Fertigungs- und Montagequalität sicherzustellen und somit die Reinheit des Kohlendioxids im Abgas zu erhöhen.

Aus der CN 115 682 711 A ist ein Verfahren zur Druckregelung in einem Drehrohrofen bekannt.

Aus der DE 10 2018 206674 A1 ist die Oxyfuel-Klinkerherstellung ohne Rezirkulation der Vorwärmerabgase bekannt.

Aus der JP 7 518888 B2 ist eine Gasführungsanordnung für Hochdruck-Wärmebehandlungsvorrichtung bekannt.

Aufgabe der Erfindung ist es, den Falschlufteintrag in einer Anlage quantitativ zu erfassen.

Gelöst wird diese Aufgabe durch das Verfahren mit den in Anspruch 1 angegebenen Merkmalen sowie durch die Vorrichtung mit den in Anspruch angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient der quantitativen Messung des Falschlufteintrages in eine Anlage zur thermischen Behandlung, beispielsweise einer Zementanlage. In einer Zementanlage werden beispielsweise thermisch Kalkstein zu Klinker oder Tone zu calcinierten Tonen umgesetzt, um so Ausgangsstoffe für Zement herzustellen. Bevorzugt handelt es sich bei der Anlage um eine Oxyfuel-Anlage, also eine Anlage, welche als Oxidationsmittel nicht Luft, sondern Sauerstoff, bevorzugt mit wenigstens 90 Vol.-%, bevorzugt mit wenigstens 95 Vol.-%, besonders bevorzugt wenigstens 99 Vol.-% Sauerstoff verwendet. Die Reinheit des Kohlendioxidgasstromes wird vom Falschlufteintrag negativ beeinflusst. Daher muss der Falschlufteintrag quantitativ bekannt sein, auch um festzustellen, ob gegebenenfalls Leckagen vorliegen, die gefunden und abgedichtet werden müssen. Daher wird das Verfahren im Rahmen einer Dichtigkeitsprüfung vor der Inbetriebnahme der Anlage durchgeführt. Dieses kann auch eine erneute Inbetriebnahme, beispielsweise nach einem Umbau, einer Instandsetzung oder einer Wartung betreffen. Der Anlage werden während der Dichtigkeitsprüfung keine Material- und Gasströme zugeführt. Die Anlage ist daher während der Durchführung des Verfahrens eben nicht im Betrieb. Dieses hat den entscheidenden Vorteil, dass alle erfassbaren Gasströme ausschließlich aus Undichtigkeiten kommen und diese eben nicht von im Betrieb der Anlage auftretenden Gasströmen überlagert werden, sodass eben auch geringe Falschluftströme messbar sind. Es kommt eben nicht darauf an, im Betrieb einen Mindeststrom an Falschluft zu detektieren, um ein Austreten aus dem Anlageninneren sicher zu verhindern, sondern es kommt darauf an, den Falschgasstrom derart zu minimieren, sodass die Falschluft die Reinheit des beim Betreib der Anlage erzeugten CO₂ eben nicht nennenswert verschlechtert und daher eine energieaufwändige Nachreinigung erforderlich machen würde. Dieses führt aber eben auch dazu, dass die im Verfahren gemessenen Gasströme klein sind im Gegensatz zu den beim Betrieb der Anlage auftretenden Gasströme, sodass diese eben nur im abgeschalteten Zustand der Anlage quantitativ erfassbar sind. An die Anlage wird ein Durchflusselement angeschlossen. Dieses erfolgt bevorzugt an einem Punkt, an dem ohnehin ein Gasstrom in die Anlage hinein oder aus der Anlage hinausbefördert wird, also eine entsprechende Öffnung ohnehin existiert. Das Durchflusselement dient zur Erfassung des Volumen- oder Massenstromes des geförderten Gases. Da die Anlage ohnehin nicht in Betrieb ist, ist ein Anschluss auch ohne weiteres möglich, da die normalen Öffnungen eben nicht für den im Betrieb notwendigen Stoffstrom zur Verfügung stehen müssen, sondern vielmehr für die Dichtigkeitsprüfung ohnehin verschlossen werden. An das Durchflusselement wird eine Pumpvorrichtung angeschlossen. Somit kann über die Pumpvorrichtung Gas aus der Anlage beziehungsweise in die Anlage gefördert werden und der genaue Volumenstrom über das Durchflusselement erfasst werden. Durchflusselement und Pumpvorrichtung sind eben nicht Bestandteil der Anlage, sondern werden nur für die Durchführung der Dichtigkeitsprüfung an diese angeschlossen. Der Druck im Inneren der Anlage wird erfasst. Hier kann insbesondere auf ohnehin in der Anlage vorhandene Drucksensoren zurückgegriffen werden. Es können auch Drucksensoren für die Durchführung des Verfahrens eingebracht werden, beispielsweise um eine verbesserte Druckauflösung zu erreichen. Die Pumpvorrichtung wird so geregelt, dass ein Unterdruck oder ein Überdruck im Inneren der Anlage konstant eingestellt wird, welcher den Druckverhältnissen im regulären Anlagenbetrieb im Inneren der Anlage entsprechen und üblicherweise 200 Pa zu 20.000 Pa betragen kann. Dadurch wird die auch später im realen Betrieb anfallende Falschluftmenge bestimmt. Hierzu ist zunächst die Pumpleistung höher, um den Unterdruck beziehungsweise Überdruck zu erreichen, im stationären Zustand ist dann der Druck im Inneren konstant und wird auch während der Prüfung konstant geregelt. Die dann geförderte Falschluftmenge, welche kontinuierlich in die Anlage durch Leckagen einströmt beziehungsweise bei einem Überdruck entsprechend einer im Regelbetrieb bei Unterdruck einströmenden Falschluftmenge entsprechenden ausströmenden Gasmenge, wird in diesem stationären Zustand quantitativ durch das Durchflusselement erfasst. Da ansonsten keine Materialien oder Gase durch die Anlage geführt werden, ist dieses Messergebnis nicht von dem Betrieb der Anlage überlagert, spielen Material- oder Druck- und Temperaturschwankungen im Prozess der Anlage keine Rolle. Es wird somit bei konstantem Druck im Inneren der Anlage der Volumenstrom durch das Durchflusselement gemessen, also in einem stationären Zustand. Es handelt sich damit eben nicht um eine klassische Dichtheitsprüfung, denn die Anlage ist eben nicht dicht und nicht vergleichbar mit den Dichtheiten der Anlagen, die klassischer Weise geprüft werden, sondern weist größere Leckagen auf, als bei klassischen Dichtheitsprüfungen, die auch akzeptabel sind. Dennoch sind diese Leckagen eben deutlich geringer als die im Betrieb anfallenden Gasströme. Damit ist vor der Inbetriebnahme der Anlage eine Prüfung des Falschlufteintrages notwendig, um zu prüfen, ob die vorgegebenen Reinheitswerte für das Kohlendioxid erreicht werden können. Dieses kann im Bedarfsfalle beispielsweise nach einer Wartung, Reparatur oder dergleichen im abgeschalteten Zustand vor der Wiederinbetriebnahme wiederholt werden.

Wird festgestellt, dass der Falschlufteintrag zu groß ist, kann nach Leckagen gesucht, diese abgedichtet und dann das Verfahren wiederholt werden. Diese Prüfung sowie die oben dargestellt Dichtheitsprüfung kann mit Unter- oder Überdruck durchgeführt werden.

In einer weiteren Ausführungsform der Erfindung wird als Durchflusselement ein Laminarflusselement verwendet. Hierbei handelt es sich insbesondere um ein Rohrbündel mit bekanntem Strömungswiderstand. Der Volumenstrom wird über den Druckabfall an dem Laminarflusselement erfasst. Dazu wird vor und nach dem Laminarflusselement der Druck gemessen und aus der Druckdifferenz mit dem bekannten Strömungswiderstand der Volumenstrom ermittelt.

In einer weiteren Ausführungsform der Erfindung wird ein Durchflusselement mit Temperatursensor verwendet. Der Volumenstrom wird entsprechend der erfassten Temperatur korrigiert.

In einer weiteren Ausführungsform der Erfindung wird ein Durchflusselement mit Feuchtigkeitssensor verwendet. Der Volumenstrom wird entsprechend der erfassten Feuchtigkeit korrigiert.

In einer weiteren Ausführungsform der Erfindung weist das Durchflusselement sowohl einen Temperatursensor als auch einen Feuchtigkeitssensor auf. Dieses ermöglicht den gemessenen Durchfluss entsprechend zu korrigieren.

In einer weiteren Ausführungsform der Erfindung wird in der Anlage ein Unterdruck von 20 bis 20.000 Pa eingestellt. Dieses entspricht üblichen Drücken, die bei der thermischen Behandlung, beispielsweise in einem Zementwerk, vorherrschen. Diese werden durch entsprechende Saugventilatoren erzeugt, die damit den Gasstrom durch die Anlage sicherstellen.

In einer weiteren Ausführungsform der Erfindung wird der gemessene Volumenstrom mit einem Grenzwert verglichen. Der Grenzwert wird aus dem nominellen Abgasvolumenstrom der Anlage und dem aus einer Reinheitsvorgabe des Abgases gebildet. Hat die Anlage beispielsweise einen nominellen Abgasvolumenstrom von 10.000 Normkubikmetern pro Stunde und soll die Reinheit wenigstens 95 % betragen, so ergibt sich, dass sich mit einem Falschlufteintrag von mehr als 500 Normkubikmetern pro Stunde dieses Ziel nicht mehr erreichen lässt. Da zusätzlich weitere Falschluftquellen bestehen, insbesondere aus Materialeintrag und -austrag sowie Brennstoffzufuhr, die mit diesem Verfahren nicht miterfasst werden, sollte der gemessene Wert den Grenzwert vorzugsweise entsprechend unterschreiten.

In einer weiteren Ausführungsform der Erfindung werden vor Durchführung des Verfahrens Öffnungen der Anlage verschlossen. Dieses umfasst beispielsweise Brennstoffzuführungen, Öffnungen für Probenahmen und dergleichen. Diese können beispielsweise durch Absperrhähne oder Steckscheiben verschlossenen werden, die meist ohnehin vorgesehen und damit bereits in der Anlage enthalten sind. Da das Verfahren auch im Bau durchgeführt wird, kann es sein, dass gewisse Anlagenkomponenten noch nicht vorhanden sind. Solche Anschlüsse für diese Komponenten können dann beispielsweise mit einem Blindflansch verschlossen werden.

In einer weiteren Ausführungsform der Erfindung weist die Anlage einen Materialkühler auf. Zum Verschluss wird ein Abtrennelement in den Materialkühler eingebracht. Bevorzugt wird das Abtrennelement an die Stelle eingebracht, an welcher auch im laufenden Betrieb die Trennung von Oxyfuel-Prozessgasatmosphäre und Umgebungsluft erfolgt. Üblicherweise wird nur der erste Teil (heißester Bereich) des Materialkühlers genutzt, um den Sauerstoff vorzuwärmen, während die Restkühlung des Klinkers auf nahe Umgebungstemperatur einfach mit Umgebungsluft durchgeführt wird. Dazu weist der Materialkühler üblicherweise Trennelemente auf, die aber ohne einen Materialstrom, der bei der Prüfung nicht vorhanden ist, eine wesentlich größere Undichtheit aufweisen und sich somit einen sehr großen und verfälschenden Falschlufteintrag bei diesem Verfahren ergeben würde. Daher wird hier vorzugsweise eine vollständige Abdichtung vorgenommen.

In einer weiteren Ausführungsform der Erfindung weist die Anlage einen Saugventilator auf, welcher im Regelbetrieb den Gasstrom durch die Anlage erzeugt und meist am Ende der Vorrichtung, beispielsweise vor dem Schornstein, angeordnet ist. Der Saugventilator wird vor Durchführung des Verfahrens abgetrennt beziehungsweise ist gegebenenfalls noch nicht installiert. Die Zuführung zum Saugventilator wird verschlossen.

In einem weiteren Aspekt betrifft die Erfindung ein Verfahren zur Abschätzung der Gaszusammensetzung beim Betrieb der Anlage. Hierzu wird dem erfindungsgemäßen Verfahren im Rahmen der Dichtigkeitsprüfung der Falschlufteintrag bestimmt und aus dem ermittelten Falschgasstrom und dem Abgasstrom die Gaszusammensetzung abgeschätzt.

In einem weiteren Aspekt betrifft die Erfindung eine Vorrichtung zur quantitativen Messung des Falschlufteintrages in eine Anlage zur thermischen Behandlung im Rahmen einer Dichtigkeitsprüfung vor Inbetriebnahme der Anlage. Mit der Vorrichtung ist insbesondere das erfindungsgemäße Verfahren durchführbar. Die Vorrichtung weist ein Durchflusselement und eine Pumpvorrichtung auf. Die Pumpvorrichtung weist einen Pumpeinlass und einen Pumpauslass auf. Die Pumpvorrichtung fördert somit Gas vom Pumpeinlass zum Pumpauslass. Das Durchflusselement weist einen Durchflusseinlass und einen Durchflussauslass auf. Der Durchflusseinlass kann dann mit der zu prüfenden Anlage verbunden werden. Die Vorrichtung weist einen Lufteinlass und einen Luftauslass auf. Über den Lufteinlass kann Luft aus der Umgebung eingesaugt werden, durch den Luftauslass kann gefördertes Gas an die Umgebung abgegeben werden. Der Durchflussauslass ist gasführend über eine Gasleitung mit dem Pumpeinlass verbunden. Der Pumpauslass ist über eine Auslassleitung mit dem Gasauslass verbunden. Im einfachsten Fall kann so Gas aus der Anlage über das Durchflusselement, die Gasleitung, die Pumpvorrichtung, die Auslassleitung und den Gasauslass aus der Anlage in die Umgebung gefördert werden. Die Vorrichtung weist eine Pumpbypassleitung auf. Die Pumpbypassleitung ist mit der Auslassleitung und der Gasleitung verbunden. Der Lufteinlass ist mit der Gasleitung verbunden. Die Gasleitung weist zwischen dem Durchflussauslass und der Pumpbypassleitung auf der einen Seite und dem Lufteinlass und dem Pumpeinlass auf der anderen Seite ein erstes Ventil auf. Der Lufteinlass weist ein zweites Ventil auf. Die Pumpbypassleitung weist ein drittes Ventil auf. Die Auslassleitung weist zwischen Pumpbypassleitung und Luftauslass ein viertes Ventil auf.

Sind nun das erste Ventil und das vierte Ventil geöffnet und das zweite Ventil und das dritte Ventil geschlossen, so wird Gas aus der Anlage über das Durchflusselement, die Gasleitung, die Pumpvorrichtung, die Auslassleitung und den Gasauslass aus der Anlage in die Umgebung gefördert. Sind das erste Ventil und das vierte Ventil geschlossen und das zweite Ventil und das dritte Ventil geöffnet, so wird Gas aus der Umgebung durch den Lufteinlass, die Pumpvorrichtung, die Pumpbypassleitung und das Durchflusselement in die Anlage gefördert. Damit kann sowohl eine Unterdruck- als auch eine Überdruckprüfung erfolgen.

Wesentlich ist jedoch, dass die Vorrichtung auch bei sehr dichten Anlagen sehr gut funktioniert. Eine Herausforderung hierbei ist, dass die Pumpvorrichtung nicht auf beliebig kleine Förderleistung zu drosseln ist. Dieses wird dadurch umgangen, dass das zweite Ventil partiell geöffnet wird, dadurch wird zusätzlich zu dem Gas aus der Anlage Gas aus dem Gaseinlass zum Gasauslass gefördert. Damit kann die Pumpvorrichtung auf einer höheren Förderleistung zuverlässiger betrieben werden. Da die Umgebungsluft erst hinter dem Durchflusselement durch den Lufteinlass zugeführt wird, wird die Messung dadurch auch nicht verfälscht.

In einer weiteren Ausführungsform der Erfindung ist das Durchflusselement ein Laminarflusselement.

In einer weiteren Ausführungsform der Erfindung weist das Durchflusselement einen Temperatursensor und/oder einen Feuchtigkeitssensor auf.

In einer weiteren Ausführungsform der Erfindung ist die Pumpvorrichtung auf einem verfahrbaren Gestell angeordnet. Die Pumpvorrichtung ist mit flexiblen Leitungssystemen, zum Beispiel Schläuchen, insbesondere Wellschläuchen aus Metall, mit der Anlage verbunden.

In einer weiteren Ausführungsform der Erfindung ist das Durchflusselement auf einem weiteren verfahrbaren Gestell angeordnet.

In einem weiteren Aspekt betrifft die Erfindung ein Verfahren zum Betreiben einer erfindungsgemäßen Vorrichtung. Zu Beginn werden das erste Ventil und das dritte Ventil geschlossen, das zweite Ventil und das vierte Ventil werden geöffnet. Dadurch wird zu Beginn nur Luft aus dem Lufteinlass durch die Pumpvorrichtung zum Luftauslass gefördert. Nun wird langsam das erste Ventil partiell geöffnet und das dritte Ventil partiell geschlossen. Dadurch wird langsam eine stärkere Saugleistung auf die Anlage gebracht. Dieses ermöglicht gerade bei gut abgedichteten Anlagen eine langsame Annäherung an den einzustellenden Zieldruck und verhindert ein zu starkes Evakuieren. Dadurch kann dann die Messung vergleichsweise schnell und sicher durchgeführt werden.

Nachfolgend ist das erfindungsgemäße Verfahren anhand eines in den Zeichnungen dargestellten Ausführungsbeispiels näher erläutert.
Fig. 1 Prüfung einer beispielhaften Zementanlage
Fig. 2 Prüfungsvorrichtung

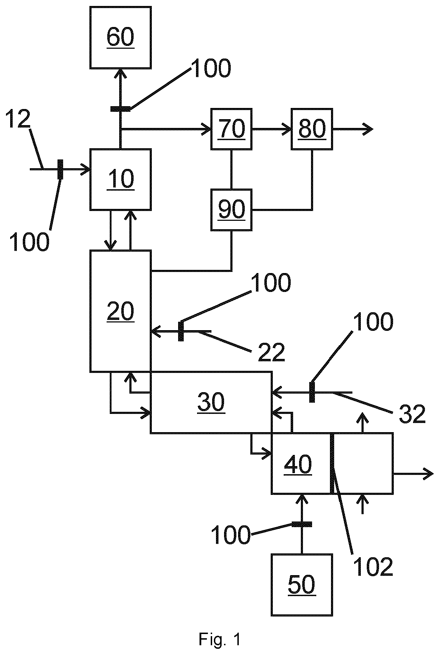

In Fig. 1 ist die Prüfung einer beispielhaften Zementanlage dargestellt, anhand der das Verfahren erläutert werden soll.

Geprüft werden soll eine Zementanlage nach dem Oxyfuel-Verfahren. Im Regelbetrieb wird über die Materialzufuhr 12 Kalkstein beziehungsweise Rohmehl in den Vorwärmer 10 eingebracht, von dort in den Calcinator 20, anschließend in den Ofen 30 und abschließend in den Materialkühler 40. Der Gasstrom läuft zu diesem Materialstrom im Gegenstrom, und zwar von der Sauerstoffquelle 50 über den Materialkühler 40, den Ofen 30, den Calcinator 20 und den Vorwärmer 10 zur Kohlendioxidabtrennung 60. Solche Anlagen sind dem Fachmann beispielsweise aus der DE 10 2018 206 673 A1 oder der DE 10 2018 206 674 A1 bekannt. Das Verfahren dient insbesondere dazu, vor der Inbetriebnahme der Anlage den Falschlufteintrag quantitativ zu bestimmen und dadurch bereits frühzeitig die Reinheit des Kohlendioxids vorhersagen und nachweisen zu können beziehungsweise gegebenenfalls zusätzliche Abdichtungsmaßnahmen vornehmen zu können.

Zur Vorbereitung des Verfahrens werden zunächst die Materialzufuhr 12, die Sauerstoffzufuhr von der Sauerstoffquelle 50, die Calcinatorbrennstoffzufuhr 22 und die Ofenbrennstoffzufuhr 32 sowie die Abgasleitung zur Kohlendioxidabtrennung 60 mit Absperrelement 100 verschlossen, welche üblicherweise vorhandenen sind. Der Materialkühler 40 weist in der Darstellung einen linken Bereich auf, welcher im Oxyfuel-Betrieb liegt und einen in der Darstellung rechten Bereich, welcher mit Umgebungsluft betrieben wird. Hier zwischen wird ein Abtrennelement 102 eingebaut, um den Oxyfuel-Bereich sauber abzutrennen.

Es wird ein Durchflusselement 70 und daran eine Pumpvorrichtung 80 angeschlossen. Beide werden über eine Steuervorrichtung 90 gesteuert, welche zusätzlich mit einer Druckmessvorrichtung, welche beispielsweise im Calcinator 20 angeordnet ist, verbunden. Hierzu kann eine ohnehin vorhandene Druckmessvorrichtung verwendet werden. Es wird der übliche Betriebsdruck vorgegeben, beispielsweise 5.000 Pa unterhalb des Umgebungsdrucks. Nun wird die Pumpenvorrichtung 80 aktiviert und so durch die Steuervorrichtung 90 geregelt, dass sich stabil der vorgegebene Prüfdruck einstellt. Ist dieser stationäre Zustand erreicht, so wird am Durchflusselement 70 der Volumenstrom gemessen, welcher dem Falschlufteintrag entspricht. Vorzugsweise wird dazu am Durchflusselement 70 auch Temperatur und Feuchtigkeit gemessen, um diese Werte bei der Kalkulation zu berücksichtigen.

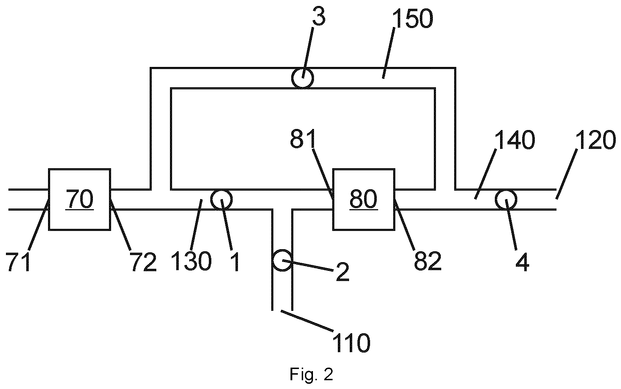

In Fig. 2 ist eine beispielhafte Vorrichtung aus Durchflusselement 70 und Pumpvorrichtung 80 schematisch gezeigt. An den Durchflusseinlass 71 auf der linken Seite wird, wie in Fig. 1 gezeigt, beispielhaft eine Zementanlage angeschlossen. Zum Evakuieren der Anlage werden das erste Ventil 1 und das vierte Ventil 4 geöffnet und das zweite Ventil 2 und das dritte Ventil 3 geschlossen. Dann kann das Gas aus der Anlage durch den Durchflusseinlass 71, das Durchflusselement 70, den Durchflussauslass 72, die Gasleitung 130 (mit dem ersten Ventil 1), den Pumpeinlass 81, die Pumpvorrichtung 80, den Pumpauslass 82, die Auslassleitung 140 (mit dem vierten Ventil 4) und den Luftauslass 120 gefördert werden. Das dritte Ventil 3 verschließt die Pumpbypassleitung 150 und das zweite Ventil 2 den Lufteinlass.

Um einen Überdruck in der Anlage zu erzeugen, beispielsweise, um mit Rauch Undichtigkeiten lokalisieren zu können, werden das erste Ventil 1und das vierte Ventil 4 geschlossen. Dann wird die Luft durch den Lufteinlass 110 (und das zweite Ventil 2), den Pumpeinlass 81, die Pumpvorrichtung 80, den Pumpauslass 82, die Pumpbypassleitung 150 (mit dem dritten Ventil 3), den Durchflussauslass 72, das Durchflusselement 70 und den Durchflusseinlass 71 in die Anlage befördert.

Wesentlich ist, dass bei einer vergleichswiese gut abgedichteten Anlage es möglich ist bei geöffnetem ersten Ventil 1, geschlossenem dritten Ventil 3 und geöffnetem vierten Ventil 4, das zweite Ventil 2 partiell zu öffnen. Dadurch gelangt mehr Gas aus der Anlage und aus dem Lufteinlass 110 durch die Pumpvorrichtung 80, die somit in einem höheren Betriebszustand verbleiben kann und so besser betrieben werden kann.

Zum Anfahren können zunächst das zweite Ventil 2 und das vierte Ventil 4 geöffnet und das dritte Ventil 3 und das erste Ventil 1 geschlossen werden. Dann wird die Pumpvorrichtung angefahren. Anschließend wird das erste Ventil 1 langsam geöffnet und im Bedarfsfall anschließend oder überlappend das zweite Ventil 2 geschlossen. Dadurch kann die Saugleistung sehr langsam und gezielt gesteigert werden, um ein Unterschreiten oder Überschreiten des angestrebten Druckes in der Anlage zu vermeiden oder wenigstens zu minimieren.

### Bezugszeichen

- 1: erstes Ventil
- 2: zweites Ventil
- 3: drittes Ventil
- 4: viertes Ventil
- 10: Vorwärmer
- 12: Materialzufuhr
- 20: Calcinator
- 22: Calcinatorbrennstoffzufuhr
- 30: Ofen
- 32: Ofenbrennstoffzufuhr
- 40: Materialkühler
- 50: Sauerstoffquelle
- 60: Kohlendioxidabtrennung
- 70: Durchflusselement
- 71: Durchflusseinlass
- 72: Durchflussauslass
- 80: Pumpvorrichtung
- 81: Pumpeinlass
- 82: Pumpauslass
- 90: Steuervorrichtung
- 100: Absperrelement
- 102: Abtrennelement
- 110: Lufteinlass
- 120: Luftauslass
- 130: Gasleitung
- 140: Auslassleitung
- 150: Pumpbypassleitung

## Patentansprüche

1. Verfahren zur quantitativen Messung des Falschlufteintrages in eine Anlage zur thermischen Behandlung im Rahmen einer Dichtigkeitsprüfung vor Inbetriebnahme der Anlage, wobei der Anlage während der Dichtigkeitsprüfung keine Material- und Gasströme zugeführt werden, wobei an die Anlage ein Durchflusselement (70) und an das Durchflusselement (70) eine Pumpvorrichtung (80) angeschlossen wird, wobei der Druck im Inneren der Anlage erfasst wird, wobei die Pumpvorrichtung (80) so geregelt wird, dass ein Unter- oder Überdruck im Inneren der Anlage konstant eingestellt wird, wobei bei konstantem Druck im Inneren der Anlage der Volumenstrom durch das Durchflusselement (70) gemessen wird.

2. Verfahren nach Anspruch 1, **dadurch gekennzeichnet, dass** in der Anlage ein Unter- oder Überdruck von 200 bis 20.000 Pa eingestellt wird.

3. Verfahren nach einem der vorstehenden Ansprüche, **dadurch gekennzeichnet, dass** als Durchflusselement (70) ein Laminarflusselement verwendet wird und der Volumenstrom über den Druckabfall an dem Laminarflusselement erfasst wird.

4. Verfahren nach einem der vorstehenden Ansprüche, **dadurch gekennzeichnet, dass** ein Durchflusselement (70) mit Temperatursensor verwendet wird, wobei der Volumenstrom entsprechend der erfassten Temperatur korrigiert wird.

5. Verfahren nach einem der vorstehenden Ansprüche, **dadurch gekennzeichnet, dass** ein Durchflusselement (70) mit Feuchtigkeitssensor verwendet wird, wobei der Volumenstrom entsprechend der erfassten Feuchtigkeit korrigiert wird.

6. Verfahren nach einem der vorstehenden Ansprüche, **dadurch gekennzeichnet, dass** der gemessene Volumenstrom mit einem Grenzwert verglichen wird, wobei der Grenzwert aus dem nominellen Abgasvolumenstrom der Anlage und einer Reinheitsvorgabe des Abgases gebildet wird.

7. Verfahren nach einem der vorstehenden Ansprüche, **dadurch gekennzeichnet, dass** vor Durchführung des Verfahrens Öffnungen der Anlage verschlossen werden.

8. Verfahren nach Anspruch 7, **dadurch gekennzeichnet, dass** die Anlage einen Materialkühler (40) aufweist, wobei zum Verschluss ein Abtrennelement (102) in den Materialkühler (40) eingebracht wird.

9. Verfahren nach einem der Ansprüche 7 bis 8, **dadurch gekennzeichnet, dass** die Anlage einen Saugventilator aufweist, wobei der Saugventilator vor Durchführung des Verfahrens abgetrennt und die Zuführung zum Saugventilator verschlossen wird.

10. Vorrichtung zur quantitativen Messung des Falschlufteintrages in eine Anlage zur thermischen Behandlung im Rahmen einer Dichtigkeitsprüfung vor Inbetriebnahme der Anlage, wobei die Vorrichtung ein Durchflusselement (70) und eine Pumpvorrichtung (80) aufweist, wobei die Pumpvorrichtung (80) einen Pumpeinlass (81) und einen Pumpauslass (82) aufweist, wobei das Durchflusselement (70) einen Durchflusseinlass (71) und einen Durchflussauslass (72) aufweist, wobei die Vorrichtung einen Lufteinlass (110) und einen Luftauslass (120) aufweist, wobei der Durchflussauslass (72) über eine Gasleitung (130) mit dem Pumpeinlass (81) verbunden ist, wobei der Pumpauslass (82) über eine Auslassleitung (140) mit dem Gasauslass verbunden ist, wobei die Vorrichtung eine Pumpbypassleitung (150) aufweist, wobei die Pumpbypassleitung (150) mit der Auslassleitung (140) und der Gasleitung (130) verbunden ist, wobei der Lufteinlass (110) mit der Gasleitung (130) verbunden ist, wobei die Gasleitung (130) zwischen Durchflussauslass (72) und Pumpbypassleitung (150) auf der einen Seite und Lufteinlass (110) und Pumpeinlass (81) auf der anderen Seite ein erstes Ventil (1) aufweist, wobei der Lufteinlass (110) ein zweites Ventil (2) aufweist, wobei die Pumpbypassleitung (150) ein drittes Ventil (3) aufweist, wobei die Auslassleitung (140) zwischen Pumpbypassleitung (150) und Luftauslass (120) ein viertes Ventil (4) aufweist.

11. Vorrichtung nach Anspruch 10, **dadurch gekennzeichnet, dass** das Durchflusselement (70) ein Laminarflusselement ist.

12. Vorrichtung nach einem der Ansprüche 10 bis 11, **dadurch gekennzeichnet, dass** das Durchflusselement (70) einen Temperatursensor und/oder einen Feuchtigkeitssensor aufweist.

13. Vorrichtung nach einem der Ansprüche 10 bis 11, **dadurch gekennzeichnet, dass** die Pumpvorrichtung (80) auf einem verfahrbaren Gestell angeordnet ist, wobei die Pumpvorrichtung (80) mit flexiblen Leitungssystemen mit der Anlage verbunden ist.

## Claims

1. Method for the quantitative measurement of the ingress of false air into a thermal treatment installation as part of a leak test prior to commissioning of the installation, wherein no material and gas flows are supplied to the installation during the leak test, wherein a flow element (70) is connected to the installation and a pump device (80) is connected to the flow element (70), wherein the pressure in the interior of the installation is detected, wherein the pump device (80) is controlled in such a manner that a negative or positive pressure is set to be constant in the interior of the installation, wherein the volume flow through the flow element (70) is measured at a constant pressure in the interior of the installation.

2. Method as claimed in claim 1, **characterised in that** a negative or positive pressure of 200 to 20000 Pa is set in the installation.

3. Method as claimed in any one of the preceding claims, **characterised in that** a laminar flow element is used as the flow element (70) and the volume flow is detected via the pressure drop at the laminar flow element.

4. Method as claimed in any one of the preceding claims, **characterised in that** a flow element (70) with a temperature sensor is used, wherein the volume flow is corrected according to the detected temperature.

5. Method as claimed in any one of the preceding claims, **characterised in that** a flow element (70) with a moisture sensor is used, wherein the volume flow is corrected according to the detected moisture.

6. Method as claimed in any one of the preceding claims, **characterised in that** the measured volume flow is compared to a limit value, wherein the limit value is formed from the nominal exhaust gas volume flow of the installation and a purity specification of the exhaust gas.

7. Method as claimed in any one of the preceding claims, **characterised in that** openings of the installation are closed before the method is performed.

8. Method as claimed in claim 7, **characterised in that** the installation has a material cooler (40), wherein a separating element (102) is introduced into the material cooler (40) for closure purposes.

9. Method as claimed in any one of claims 7 to 8, **characterised in that** the installation has a suction fan, wherein the suction fan is disconnected and the supply to the suction fan is closed before the method is performed.

10. Device for the quantitative measurement of the ingress of false air into a thermal treatment installation as part of a leak test prior to commissioning of the installation, wherein the device has a flow element (70) and a pump device (80), wherein the pump device (80) has a pump inlet (81) and a pump outlet (82), wherein the flow element (70) has a flow inlet (71) and a flow outlet (72), wherein the device has an air inlet (110) and an air outlet (120), wherein the flow outlet (72) is connected to the pump inlet (81) via a gas line (130), wherein the pump outlet (82) is connected to the gas outlet via an outlet line (140), wherein the device has a pump bypass line (150), wherein the pump bypass line (150) is connected to the outlet line (140) and the gas line (130), wherein the air inlet (110) is connected to the gas line (130), wherein the gas line (130) has a first valve (1) between the flow outlet (72) and pump bypass line (150) on one side and the air inlet (110) and pump inlet (81) on the other side, wherein the air inlet (110) has a second valve (2), wherein the pump bypass line (150) has a third valve (3), wherein the outlet line (140) has a fourth valve (4) between the pump bypass line (150) and air outlet (120).

11. Device as claimed in claim 10, **characterised in that** the flow element (70) is a laminar flow element.

12. Device as claimed in any one of claims 10 to 11, **characterised in that** the flow element (70) has a temperature sensor and/or a humidity sensor.

13. Device as claimed in any one of claims 10 to 11, **characterised in that** the pump device (80) is arranged on a movable frame, wherein the pump device (80) is connected to the installation by flexible line systems.

## Revendications

1. Procédé de mesure quantitative de l'introduction d'air infiltré dans une installation pour le traitement thermique dans le cadre d'un contrôle d'étanchéité, avant la mise en service de l'installation, dans lequel pendant le contrôle d'étanchéité, on n'envoie pas de courant de matière et de gaz à l'installation, on raccorde à l'installation un élément (70) de passage et un dispositif (80) de pompage à l'élément (70) de passage, dans lequel on détecte la pression à l'intérieur de l'installation, dans lequel on règle le dispositif (80) de pompage de manière à établir à une valeur constante la dépression ou la surpression à l'intérieur de l'installation, dans lequel, à la pression constante à l'intérieur de l'installation, on mesure le courant en volume passant dans l'élément (70) de passage.

2. Procédé suivant la revendication 1, **caractérisé en ce que** l'on règle dans l'installation une dépression ou une surpression de 200 à 20 000 Pa.

3. Procédé suivant l'une des revendications précédentes, **caractérisé en ce que** l'on utilise, comme élément (70) de passage, un élément à écoulement laminaire et on détecte le courant en volume par la chute de pression sur l'élément à écoulement laminaire.

4. Procédé suivant l'une des revendications précédentes, **caractérisé en ce que** l'on utilise un élément (70) de passage ayant une sonde de température, dans lequel on corrige le courant en volume, conformément à la température détectée.

5. Procédé suivant l'une des revendications précédentes, **caractérisé en ce que** l'on utilise un élément (70) de passage ayant un capteur d'humidité, dans lequel on corrige le courant en volume, conformément à l'humidité détectée.

6. Procédé suivant l'une des revendications précédentes, **caractérisé en ce que** l'on compare le courant en volume mesuré à une valeur limite, dans lequel on forme la valeur limite à partir du courant nominal en volume de l'effluent gazeux de l'installation et d'une prescription de pureté de l'effluent gazeux.

7. Procédé suivant l'une des revendications précédentes, **caractérisé en ce que**, pour effectuer le procédé, on ferme des ouvertures de l'installation.

8. Procédé suivant la revendication 7, **caractérisé en ce que** l'installation a un refroidisseur (40) de matériau, dans lequel, pour la fermeture, on introduit un élément (102) de séparation dans le refroidisseur (40) de matériau.

9. Procédé suivant l'une des revendications 7 à 8, **caractérisé en ce que** l'installation a un ventilateur d'aspiration, dans lequel on sépare le ventilateur d'aspiration avant d'effectuer le procédé et on ferme l'arrivée au ventilateur d'aspiration.

10. Dispositif de mesure quantitative de l'introduction d'air infiltré dans une installation de traitement thermique dans le cadre d'un contrôle d'étanchéité, avant la mise en service de l'installation dans lequel le dispositif a un élément (70) de passage et un dispositif (80) de pompage, dans lequel le dispositif (80) de pompage a une entrée (81) de pompe et une sortie (82) de pompe, dans lequel l'élément (70) de passage a une entrée (71) de passage et une sortie (72) de passage, dans lequel le dispositif a une entrée (110) d'air et une sortie (120) d'air, dans lequel la sortie (72) de passage communique avec l'entrée (81) de la pompe par un conduit (130) pour du gaz, dans lequel la sortie (82) de la pompe communique avec la sortie pour du gaz par un conduit (140) de sortie, dans lequel le dispositif a un conduit (150) de dérivation de pompage, dans lequel le conduit (150) de dérivation de pompage communique avec le conduit (140) de sortie et le conduit (130) pour du gaz, dans lequel l'entrée (110) d'air communique avec le conduit (130) pour du gaz, dans lequel le conduit (130) pour du gaz a, entre la sortie (72) de passage et le conduit (150) de dérivation de pompage, d'une part, et l'entrée (110) d'air et l'entrée (81) de la pompe d'autre part, une première soupape (1), dans lequel l'entrée (110) pour de l'air a une deuxième soupape (2), dans lequel le conduit (150) de dérivation de pompage a une troisième soupape (3), dans lequel la conduite (140) de sortie a une quatrième soupape (4) entre le conduit (150) de dérivation de pompage et la sortie (120) d'air.

11. Dispositif suivant la revendication 10, **caractérisé en ce que** l'élément (70) de passage est un élément à écoulement laminaire.

12. Dispositif suivant l'une des revendications 10 à 11, **caractérisé en ce que** l'élément (70) de passage a une sonde de température et/ou une sonde d'humidité.

13. Dispositif suivant l'une des revendications 10 à 11, **caractérisé en ce que** le dispositif (80) de pompage est disposé sur un bâti déplaçable, dans lequel le dispositif (80) de pompage communique avec l'installation par des systèmes souples de conduite.
